# EUROPÄISCHE PATENTANMELDUNG

(11) **EP 0 870 681 A1**
(43) Veröffentlichungstag der Anmeldung: **14.10.1998**
(21) Anmeldenummer: 98101050.7
(22) Anmeldetag: 22.01.1998
(51) Int. Cl.: B65B 51/26

(54) **Längssiegelvorrichtung für eine Schlauchbeutelverapckungsmaschine**

(30) Priorität: 11.04.1997 DE 19715045
(71) Anmelder: Rovema Verpackungsmaschinen GmbH, 35463 Fernwald (DE)
(72) Erfinder: Kammler, Roman, Dr., 67547 Worms (DE); Baur, Walter, Dr., 63584 Gründau (DE)

(57) **Zusammenfassung**

Bei einer Schlauchbeutelmaschine sind als Längssiegeleinrichtung 9 zwei Schweißbacken 23 mit jeweils einer nachgeordneten Rolle 24 vorgesehen. Eine Längssiegelnaht 14 des Folienschlauches 6 verläuft mischen den Schweißbacken 23 und wird von den Rollen 24 eingeklemmt. Die von den Heizflächen 26 der Schweißbacke 23 beidseits erwärmte Längssiegelnaht 14 wird von den Rollen verpresst. Mit der Schweißvorrichtung 22 sind erhöhte Verschweißungsgeschwindigkeiten erzielbar

## Beschreibung

Die Erfindung betrifft eine Schlauchbeutelmaschine mit einer Längssiegeleinrichtung zur Erzeugung einer Längssiegelnaht eines Folienschlauches, insbesondere einer kontinuierlichen Erzeugung der Längssiegelnaht.

Es ist eine Längssiegeleinrichtung mit einer Schweißbacke bekannt, die an einer vertikalen Schlauchbeutelmaschine einer kontinuierlichen Längsnahterzeugung an einem Folienschlauch dient. Die Schweißbacke ist eine sogenannte Schleiferbacke, d.h. sie ist in Schleifkontakt mit einer transportierten Kunststoffolie.

Die bekannte Längssiegeleinrichtung hat den Nachteil, daß die Schweißbacke nur mit einem relativ geringen Druck gegen die Kunststoffolie wirken darf. Bei einem hohen Druck würde der Folientransport infolge der Reibungskraft behindert werden, und ungewünschte Deformationen des von der Schweißbacke aufgeschmolzenen Kunststoffs wären möglich.

Der geringe Druck erlaubt nur eine relativ geringe Verschweißgeschwindigkeit, da die Verschweißung der Kunststoffolie bei geringem Druck ungünstig ist. Die Verschweißung der beiden aufeinanderliegenden Bereiche der Kunststoffolie ist erschwert, da lediglich ein Mindestschweißdruck mit der bekannten Längssiegeleinrichtung erzeugt werden kann.

Der Erfindung liegt die Aufgabe zu Grunde, eine Schlauchbeutelmaschine gemäß dem Oberbegriff des Anspruchs 1, mit einer Längssiegeleinrichtung, die eine Schweißbacke aufweist, derart auszugestalten, daß eine deutlich höhere Verschweißungsgeschwindigkeit bei erhöhtem Schweißdruck erzielbar ist.

Gelöst ist die Aufgabe gemäß dem kennzeichnenden Teil des Anspruchs 1. Danach sind als Längssiegeleinrichtung zwei Schweißbacken vorgesehen, welche eine vom Folienschlauch abstehende Längssiegelnaht auf gegenüberliegenden Seiten erwärmen, ist die Längssiegelnaht durch eine Längssiegeleinrichtung bewegbar, und sind in Folientransportrichtung der Längssiegeleinrichtung nachgeordnet zwei gegeneinander wirkende, gegenläufige, die Längssiegelnaht einklemmende Rollen vorgesehen.

Die erfindungsgemäße Schlauchbeutelmaschine hat den Vorteil, daß mit ihr eine deutlich höhere Verschweißgeschwindigkeit bei erhöhtem Schweißdruck erreicht wird. Die Schweißbacken erwärmen die Längssiegelnaht von beiden Seiten und somit relativ schnell. Die Rollen bringen einen relativ hohen Schweißdruck auf, ohne dabei den Folientransport zu beeinträchtigen. Die Rollen bewirken die eigentliche Verpressung der zu verschweißenden Längssiegelnaht. Da jeweils der Abstand einer Rolle zu einer Schweißbacke relativ gering ist, erfolgt an den Rollen die Verpressung der noch sehr warmen Längssiegelnaht. Während der Zeit für das Zurücklegen des Abstands kann die von der Schweißbacke abgegebene Wärme in die zu verschweißenden Kontaktflächen der Folie gelangen, die gegeneinander verpresst werden.

Weitere, vorteilhafte Ausgestaltungen der erfindungsgemäßen Schweißvorrichtung sind in den Ansprüchen 2 bis 15 beschrieben.

Eine kompakte Längssiegeleinrichtung wird erzielt, wenn analog Anspruch 2 jede Schweißbacke mit einer benachbarten, nachgeordneten Rolle verbunden ist, wobei jede Rolle gegenüber einer Schweißbacke mittels einer Spanneinrichtung vorgespannt ist, und wobei die Heizfläche jeder Schweißbacke in die gleiche Richtung wie die Mantelfläche der mit der Schweißbacke verbundenen Rolle weist. Der geringe Abstand zwischen jeweils einer Schweißbacke und einer Rolle hat den Vorteil, daß die Rolle durch Strahlungswärme von der Schweißbacke mit erwärmt wird. Da die Rolle relativ warm ist, kommt es zu keinem nennenswerten Abkühlungsvorgang der Längssiegelnaht an den Rollen, wodurch auch die Verschweißungsgeschwindigkeit relativ hoch ist.

Ist die Rolle über einen Steg und ein Gelenk direkt mit der Schweißbacke verbunden (Anspruch 3), so erfolgt über den Steg eine Wärmeleitung von der Schweißbacke zur Rolle und die Verschweißung wird weiter verbessert. Die Wärmeleitfähigkeit (Anspruch 6) des Stegs wird hierbei mittels geeigneter Materialauswahl optimiert.

Eine Einstückigkeit der Schweißvorrichtung wird erreicht, wenn die Rolle nur mit der Schweißbacke verbunden ist. Dies ist bei einer Ausgestaltung nach Anspruch 4 der Fall. Hierbei ist die Spanneinrichtung mit der Schweißbacke verbunden, und die Spanneinrichtung wirkt gegen den Steg. Die Einstückigkeit der Schweißvorrichtung ist bei der Montage und der Justierung der Schweißvorrichtung von Vorteil.

Eine relativ einfache Spanneinrichtung kann mittels einer Feder erzielt werden (Anspruch 5). Die Feder kann in einer kompakten Bauweise derart gegen den Steg wirken, daß der Steg analog eines einarmigen Hebels um das Gelenk gedreht wird.

Ist an der Schweißbacke eine spitze Verlängerung zum Verlängern der Heizfläche vorgesehen, wobei die Verlängerung gegen die Mantelfläche der Rolle ausgerichtet ist (Anspruch 7), so sind damit zwei Vorteile erreicht. Zum einen wird durch die Verlängerung die Erwärmung des Guts verbessert. Zum anderen wird der Abstand zwischen der Rolle und der Schweißbacke minimiert. Beide Vorteile führen zu einem schnelleren Schweißvorgang.

Ist die Längssiegeleinrichtung mittels einer Stelleinrichtung bzgl. ihres Abstandes zum zu verschweißenden Gut verstellbar (Anspruch 8), so kann dieser Abstand in Abhängigkeit des zu verschweißenden Materials, der Temperatur der Schweißbacke und der Verschweißungsgeschwindigkeit vorgewählt werden. Da die Rolle gegenüber der Schweißbacke vorgespannt ist, bleibt die Rolle auch bei einem geänderten Abstand gegen das Gut verpresst.

Die Längssiegeleinrichtung eignet sich als Längssiegeleinrichtung einer vertikalen Schlauchbeutelmaschine (Anspruch 9). Die Verpackungsgeschwindigkeit ist hier maximal, wenn die zu verschweißende Folienbahn kontinuierlich weitertransportiert wird. Die Längssiegeleinrichtung gewährleistet dabei ein konstantes Schweißergebnis bei der Erzeugung der Längssiegelnaht des Folienschlauches. Außer einer in der Regel mittig am erzeugten Schlauchbeutel verlaufenden Längssiegelnaht kann ein Folienschlauch auch eine außermittige Verschweißung parallel zur Folientransporteinrichtung erfahren.

Ist ein Antrieb für die Rolle vorgesehen (Anspruch 10), so kann die Rolle mit der gleichen Geschwindigkeit wie die Folienbahn und der Folienschlauch angetrieben werden, so daß keine Stauchung oder Verzerrung des Folienschlauches an der Rolle vorkommen kann.

Sind die angetriebenen Rollen als Folienabzug oder als Teil eines Folienabzugs vorgesehen (Anspruch 11), so ist der technische Aufwand insofern verringert, als ein separater Folienabzug ganz oder teilweise entfallen kann.

Sind die angetriebenen Rollen Teil des Folienabzugs, und ist als weiterer Teil des Folienabzugs ein Riemenabzug oder ein Rollenabzug vorgesehen, der gegen den Folienschlauch und das Füllrohr wirkt, und der auf der den Rollen gegenüberliegenden Seite des Füllrohres liegt (Anspruch 12), so wird zum einen ein Riemenabzug oder ein Rollenabzug eingespart, da die Rollen dessen Funktion übernehmen. Zum anderen erfolgt das Abziehen der Folie verzerrungsfrei, da der Folienabzug in symmetrischer Weise am Füllrohr angeordnet ist.

Der Lauf der Längssiegelnaht durch die Schweißbacken und die den Schweißbacken nachgeordneten Rollen wird verbessert, wenn gemäß Anspruch 13 in Folientransportrichtung vor der Längssiegeleinrichtung zwei gegeneinander gepresste, gegenläufig angetriebene, die Längssiegelnaht zwischen sich einklemmende Vorabzugsrollen vorgesehen sind.

Die Wärmeübertragung von einer Schweißbacke in die Längssiegelnaht wird verbessert, wenn analog Anspruch 14 ein um zwei Räder und entlang der Heizfläche der Schweißbacke verlaufendes Heißsiegelband vorgesehen ist, und die Schweißbacke über das Heißsiegelband die Längssiegelnaht erwärmt. Zwischen dem Heißsiegelband und der Folie liegt ein Gleichlauf vor. Dadurch kommt keine Folienverzerrung vor.

Sind die Heizflächen der Schweißbacken mit einer reibungsmindernden Beschichtung versehen (Anspruch 15), so wird die Standzeit der Längssiegeleinrichtung erhöht.

Im folgenden wird die erfindungsgemäße Schlauchbeutelmaschine anhand von Ausführungsbeispiele darstellenden Figuren näher beschrieben. Es zeigt:
- Figur 1: in einer Seitenansicht eine vertikale Schlauchbeutelmaschine, mit einer von einer Vorratsrolle abgezogenen Folienbahn, einer Formschulter zum Umformen der Folienbahn zu einem Folienschlauch, einem Folienabzug und einer Längssiegeleinrichtung, die beide gegen den Folienschlauch und ein Füllrohr im Folienschlauch wirken, und um Achsen umlaufenden Querbacken mit Trenneinrichtung, wobei die Längssiegeleinrichtung zwei Schweißbacken und zwei Rollen aufweist, und die Längssiegeleinrichtung des Folienschlauches zwischen den Schweißbacken und den Rollen verläuft;
- Figur 2: in einer Seitenansicht die Längssiegeleinrichtung der Figur 1, wobei jeweils eine Rolle über einen Steg und ein Gelenk mit einer Schweißbacke verbunden ist, und wobei jeweils eine Spanneinrichtung gegen einen Steg wirkt;
- Figur 3: in einer Seitenansicht eine Längssiegeleinrichtung mit zwei Schweißbacken und nachgeordneten, gegenläufig angetriebenen, die Längsnaht einklemmenden Rollen, und mit zwei Abzugsriemen;
- Figur 4: in einer Seitenansicht eine Längssiegeleinrichtung analog Figur 3, ohne die gegenüberliegenden Abzugsriemen;
- Figur 5: in einer Seitenansicht den um 90 Grad gedrehten Gegenstand der Figur 4;
- Figur 6: in einer Seitenansicht einen Gegenstand analog Figur 4, jedoch zusätzlich mit zwei gegenläufig angetriebenen, die Längssiegelnaht einklemmenden Vorabzugsrollen, sowie
- Figur 7: in einer Seitenansicht einen Gegenstand analog Figur 4, jedoch zusätzlich mit einem um eine Schweißbacke umlaufendes Heißsiegelband.

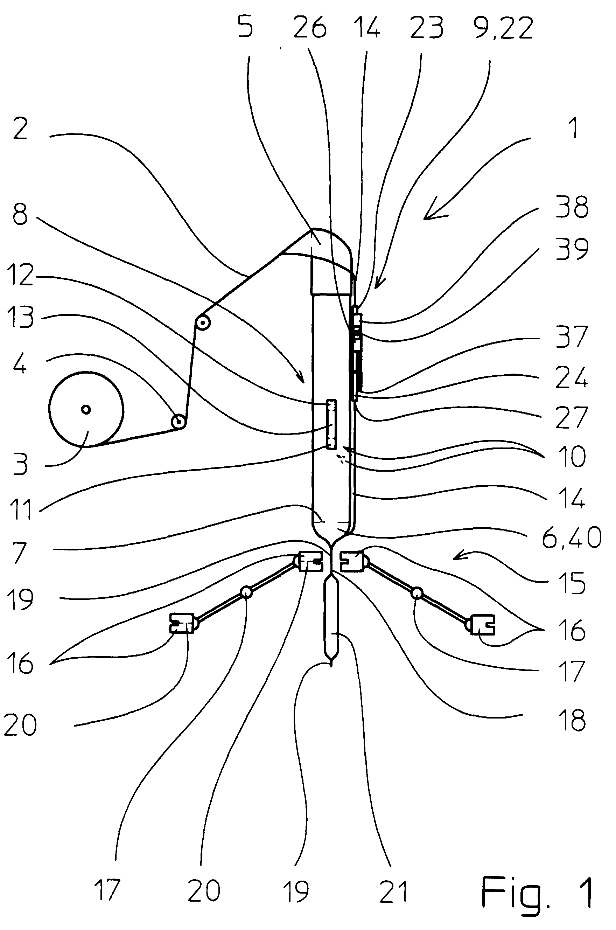

An einer vertikalen Schlauchbeutelmaschine 1 wird eine Folienbahn 2 von einer Vorratsrolle 3 abgezogen, an einer Umlenkrolle 4 umgelenkt und mittels einer Formschulter 5 zu einem Folienschlauch 6 umgeformt (Figur 1). Der Folienschlauch 6 umgibt ein Füllrohr 7. Gegen den Folienschlauch 6 und das Füllrohr 7 wirken ein Folienabzug 8 und eine Längssiegeleinrichtung 9. Der Folienabzug 8 besteht aus zwei gegenüberliegenden Riemenabzügen 10. Jeder Riemenabzug 10 enthält einen um zwei Räder 11, 12 umlaufenden, von einem Rad angetriebenen Abzugsriemen 13 für den Weitertransport der Folienbahn 2 und des Folienschlauches 6. Die Längssiegeleinrichtung 9 verschweißt die Längssiegelnaht 14 des Folienschlauches 6. Unterhalb des Füllrohrs 7 wird der durch das Füllrohr 7 befüllte Folienschlauch 6 mittels einer Querschweißeinrichtung 15 quer zur Folientransportrichtung verschweißt. Die Querschweißeinrichtung 15 besteht aus Querbacken 16, die um Achsen 17 umlaufen und dabei die Kopfnaht 18 und die Bodennaht 19 der erzeugten und mittels einer Trenneinrichtung 20 vom Folienschlauch 6 getrennten Schlauchbeutel 21 verschweißen. Der Folientransport erfolgt kontinuierlich.

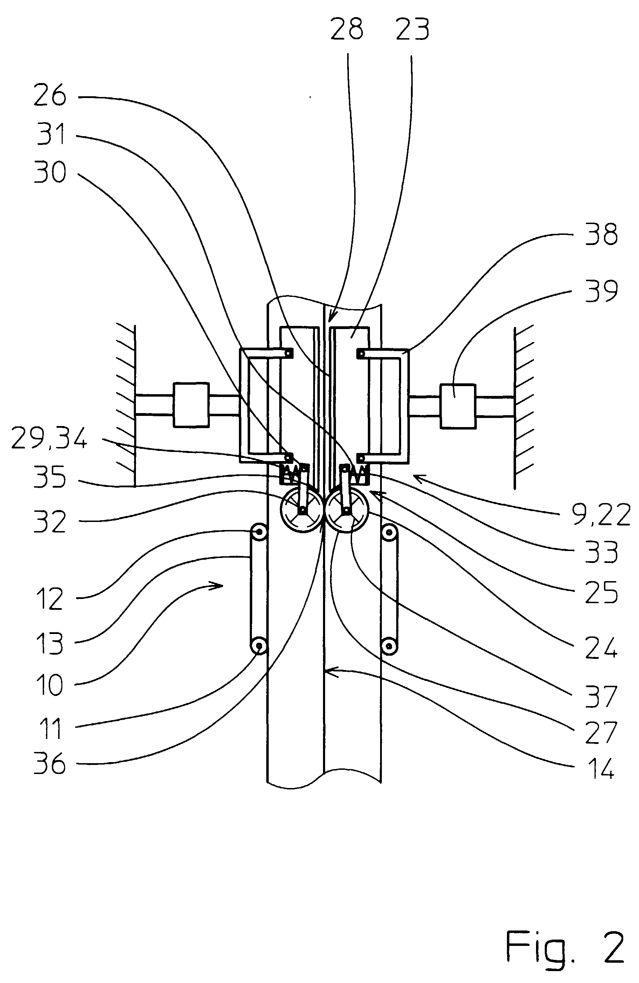

Die Längssiegeleinrichtung 9 ist eine auf entgegengesetzte Seiten der vom Folienschlauch 6 abstehenden Längssiegelnaht 14 wirkende Schweißeinrichtung 22 (Figur 2). Die Längssiegeleinrichtung 9 weist zwei mit lichten Abstand zur Längssiegelnaht 14 angeordnete Schweißbacken 23 auf.

Mit jeder Schweißbacke 23 der Schweißvorrichtung 22 ist eine der Schweißbacke 23 benachbarte Rolle 24 verbunden. Die Rolle 24 ist gegenüber der Schweißbacke 23 mittels einer Spanneinrichtung 25 vorgespannt und dient dem kontinuierlichen Verpressen der aufgeschmolzenen Längssiegelnaht 14. Eine Heizfläche 26 einer Schweißbacke 23 weist in die gleiche Richtung wie die Mantelfläche 27 der zugeordneten Rolle 24 gegen den Folienschlauch 6. Aufgrund ihrer Vorspannung üben die Rollen 24 einen relativ großen Druck gegen die Längssiegelnaht 14 aus. Jede Schweißbacke 23 weist einen lichten Spalt 28 zur Längssiegelnaht 14 auf. Sie könnte aber auch in Schleifkontakt mit der Längssiegelnaht 14 sein. Die von den Schweißbacken 23 aufgeschmolzene Längssiegelnaht 14 wird an den Rollen 24 gepresst und derart verschweißt. Aufgrund des geringen Abstandes zwischen Schweißbacken 23 und Rollen 24 erleidet die Schweißnaht 14 kaum eine Abkühlung entlang des Wegs von den Schweißbacken 23 zu den Rollen 24.

Jede Rolle 24 wird mittels eines Antriebs 53 mit der gleichen Geschwindigkeit angetrieben wie sie der Folienschlauch 6 hat, und ist über einen Steg 29 und ein Gelenk 30 mit einer Schweißbacke 23 verbunden. Die Spanneinrichtung 25 enthält eine Feder 31, welche mit einer Schweißbacke 23 über einen Anschlag 33 verbunden ist und gegen den Steg 29 wirkt. Jede Rolle 24 ist an ihrem Drehpunkt 32 mit dem Steg 29 drehbar verbunden. Ein Steg 29 wirkt als einarmiger, um ein Gelenk 30 verschwenkbarer Hebel. Der Steg 29 besteht aus einem Material 34 mit einer hohen Wärmeleitfähigkeit. Dadurch wird eine Rolle 24 zusätzlich zur Wärmestrahlung von einer Schweißbacke 23 erwärmt.

An den Schweißbacken 23 ist eine spitze Verlängerung 35 zum Verlängern der Heizfläche 26 der Schweißbacke 23 vorgesehen. Die Verlängerung 35 ist gegen die Mantelfläche 27 einer Rolle 24 ausgerichtet. Die Verlängerung 35 verkürzt den Abstand zwischen der Schweißbacke 23 und der Kontaktstelle 35 der Rolle 24 mit dem Folienschlauch 6.

Die Schweißbacken 23 werden mittels Heizpatronen beheizt. Jede Schweißbacke 23 ist über einen Bügel 38 mit einer Stelleinrichtung 39 verbunden. Mittels der Stelleinrichtung 39 wird der Abstand zwischen der Schweißbacke 23 und dem Folienschlauch 6 als zu verschweißendes Gut 40 verstellt. Die Rollen 24 werden mittels jeweils eines Antriebs 37 analog dem Riemenabzug 10 angetrieben.

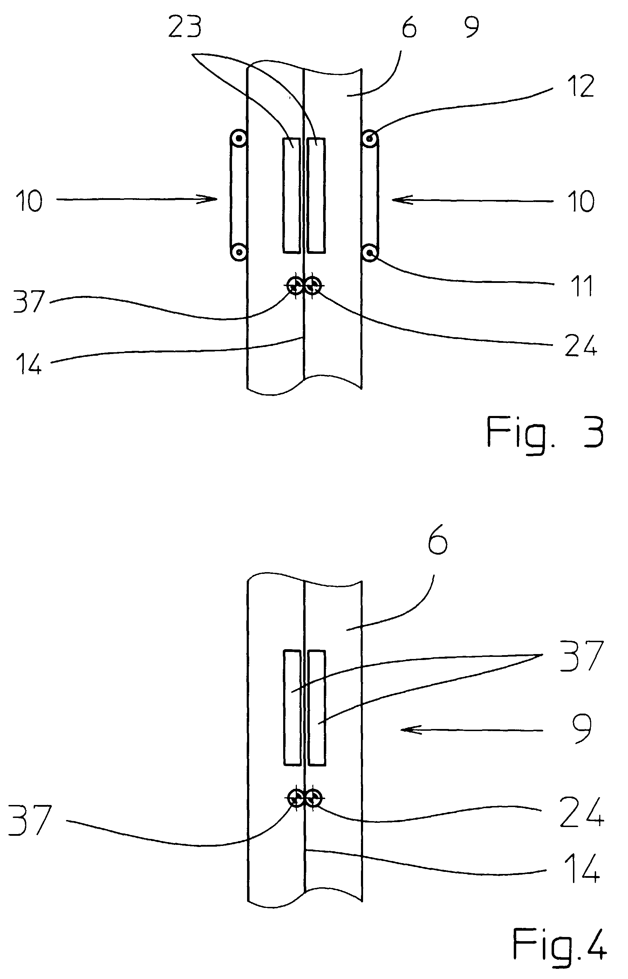

Bei einem anderen Ausführungsbeispiel (Figur 3) ist ebenso jeweils ein Antrieb 37 pro Rolle 24 vorgesehen. Im Vergleich zum vorherigen Ausführungsbeispiel sind die Schweißbacken 23 und die Rollen 24 voneinander getrennt.

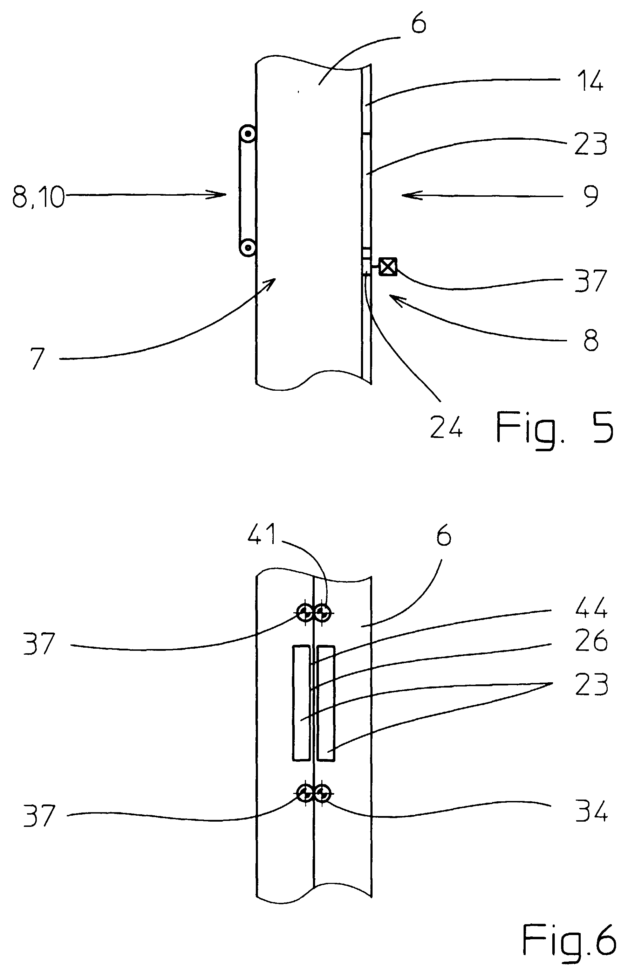

Beim Ausführungsbeispiel der Figuren 4 und 5 sind im Unterschied zum Ausführungsbeispiel der Figur 3 die beiden Riemenabzüge 10 durch einen einzigen Riemenabzug 10 ersetzt worden, der auf der den Rollen 24 gegenüberliegenden Seite des Füllrohres 7 liegt. Während der Riemenabzug 10 ein Teil des Folienabzugs 8 ist, bilden die Rollen 24 den anderen Teil des Folienabzugs 8.

Beim Ausführungsbeispiel der Figur 6 sind in Folientransportrichtung vor der Längssiegeleinrichtung 9 zwei gegeneinander gepresste, gegenläufig mittels Antrieben 37 angetriebene, die Längssiegelnaht 14 zwischen sich einklemmende Vorabzugsrollen 41 vorgesehen. Die Vorabzugsrollen 41 dienen einem verbesserten Lauf der Längssiegelnaht 14 durch die Schweißbacken 23 und die angetriebenen Rollen 24. Die Heizflächen 26 der Schweißbacken sind mit einer reibungsmindernden Beschichtung 44 versehen.

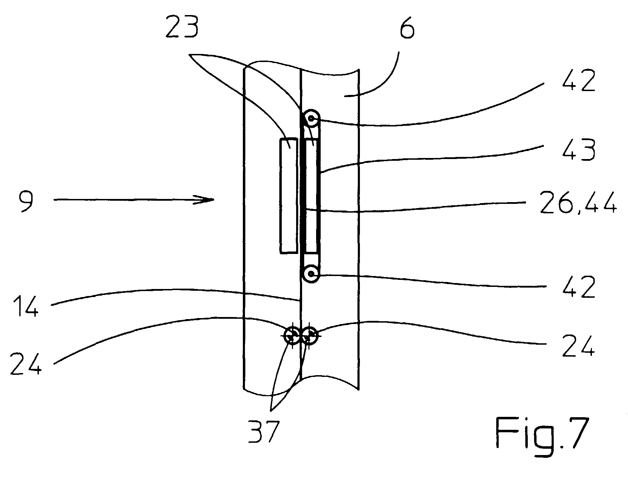

Beim Ausführungsbeispiel der Figur 7 ist an einer Schweißbacke 23 ein um die Schweißbacke 23 und zwei Räder 42 umlaufendes Heißsiegelband 43 vorgesehen. Diese Schweißbacke 23 erwärmt mittels seiner Heizfläche 26 das Heißsiegelband 43. Die Heizfläche 26 weist eine abriebsmindernde Beschichtung 44 auf.

Durch das mit dem Folienschlauch 6 mitlaufende Heißsiegelband 43 erfolgt eine verbesserte Wärmeeinbringung von der Schweißbacke 23 in die Längssiegelnaht 14.
- 1: vertikale Schlauchbeutelmaschine
- 2: Folienbahn
- 3: Vorratsrolle
- 4: Umlenkrolle
- 5: Formschulter
- 6: Folienschlauch
- 7: Füllrohr
- 8: Folienabzug
- 9: Längssiegeleinrichtung
- 10: Riemenabzug
- 11, 12: Rad
- 13: Abzugsriemen
- 14: Längssiegelnaht
- 15: Querschweißeinrichtung
- 16: Querbacke
- 17: Achse
- 18: Kopfnaht
- 19: Bodennaht
- 20: Trenneinrichtung
- 21: Schlauchbeutel
- 22: Schweißeinrichtung
- 23: Schweißbacke
- 24: Rolle
- 25: Spanneinrichtung
- 26: Heizfläche
- 27: Mantelfläche
- 28: Spalt
- 29: Steg
- 30: Gelenk
- 31: Feder
- 32: Drehpunkt
- 33: Anschlag
- 34: Material
- 35: Verlängerung
- 36: Kontaktstelle
- 37: Antrieb
- 38: Bügel
- 39: Stelleinrichtung
- 40: Gut
- 41: Vorabzugsrolle
- 42: Rad
- 43: Heißsiegelband
- 44: Beschichtung

## Patentansprüche

1. Schlauchbeutelmaschine mit einer Vorratsrolle, einer von der Vorratsrolle mittels eines Folienabzugs abziehbaren Folienbahn, einer Formschulter zum Umformen der Folienbahn zu einem Folienschlauch, einem Füllrohr zur Aufnahme des Folienschlauches, einer Längssiegeleinrichtung zur Erzeugung einer Längssiegelnaht am Folienschlauch, sowie einer Querschweißeinrichtung mit Trenneinrichtung zum Verschweißen des Folienschlauches quer zur Folientransporteinrichtung und zum Durchtrennen des Folienschlauches, dadurch gekennzeichnet, daß als Längssiegeleinrichtung (9) zwei Schweißbacken (23) vorgesehen sind, welche die vom Folienschlauch (6) abstehende Längssiegelnaht (14) auf gegenüberliegenden Seiten erwärmen, daß die Längssiegelnaht (14) durch die Längssiegeleinrichtung (9) bewegbar ist, und daß in Folientransportrichtung der Längssiegeleinrichtung (9) nachgeordnet zwei gegeneinander wirkende, gegenläufige, die Längssiegelnaht (14) einklemmende Rollen (24) vorgesehen sind.

2. Schlauchbeutelmaschine nach Anspruch 1, dadurch gekennzeichnet, daß mit jeweils einer Schweißbacke (23) eine der Schweißbacke (23) benachbarte, nachgeordnete Rolle (24) verbunden ist, daß jede Rolle (24) gegenüber einer Schweißbacke (23) mittels einer Spanneinrichtung (25) vorgespannt ist, und daß die Heizfläche (26) jeder Schweißbacke (23) in die gleiche Richtung wie die Mantelfläche (27) der mit der Schweißbacke (23) verbundenen Rolle (24) weist.

3. Schlauchbeutelmaschine nach Anspruch 2, dadurch gekennzeichnet, daß die Rolle (24) über einen Steg (29) und ein Gelenk (36) direkt mit der Schweißbacke (23) verbunden ist.

4. Schlauchbeutelmaschine nach Anspruch 2 oder Anspruch 3, dadurch gekennzeichnet, daß die Spanneinrichtung (25) mit der Schweißbacke (23) verbunden ist, und daß die Spanneinrichtung (25) gegen den Steg (29) wirkt.

5. Schlauchbeutelmaschine nach Anspruch 3 oder Anspruch 4, dadurch gekennzeichnet, daß die Spanneinrichtung (25) eine Feder (31) enthält.

6. Schlauchbeutelmaschine nach Anspruch 3 oder Anspruch 4 , dadurch gekennzeichnet, daß der Steg (29) aus einem Material (34) mit hoher Wärmeleitfähigkeit besteht.

7. Schlauchbeutelmaschine nach Anspruch 2, Anspruch 3 oder Anspruch 4, dadurch gekennzeichnet, daß an der Schweißbacke (23) eine spitze Verlängerung (35) zum Verlängern der Heizfläche (26) der Schweißbacke (23) vorgesehen ist, wobei die Verlängerung (35) gegen die Mantelfläche (27) der Rolle (24) ausgerichtet ist.

8. Schlauchbeutelmaschine nach Anspruch 2, Anspruch 3 oder Anspruch 4, dadurch gekennzeichnet, daß die Längssiegeleinrichtung (9) mittels einer Stelleinrichtung (39) bezüglich ihres Abstandes zum zu verschweißenden Gut (40) verstellbar ist.

9. Schlauchbeutelmaschine nach Anspruch 1, dadurch gekennzeichnet, daß die Längssiegeleinrichtung (9) an einer vertikalen Schlauchbeutelmaschine (1) vorgesehen ist.

10. Schlauchbeutelmaschine nach Anspruch 1, dadurch gekennzeichnet, daß jeweils ein Antrieb (37) für eine Rolle (24) vorgesehen ist.

11. Schlauchbeutelmaschine nach Anspruch 1 oder Anspruch 2, sowie nach Anspruch 10, dadurch gekennzeichnet, daR die Rollen (24) als Folienabzug (8) oder als Teil des Folienabzugs (8) vorgesehen sind.

12. Schlauchbeutelmaschine nach Anspruch 11, dadurch gekennzeichnet, daR die Rollen (24) Teil des Folienabzugs (8) sind, und daR als weiterer Teil des Folienabzugs (8) ein Riemenabzug (10) oder ein Rollenabzug vorgesehen ist, der gegen den Folienschlauch (6) und das Füllrohr (7) wirkt, und der auf der den Rollen (24) gegenüberliegenden Seite des Füllrohres (7) liegt.

13. Schlauchbeutelmaschine nach Anspruch 1, Anspruch 2, Anspruch 11 oder Anspruch 12, dadurch gekennzeichnet, daß in Folientransportrichtung vor der Längssiegeleinrichtung (9) zwei gegeneinander gepresste, gegenläufig angetriebene, die Längssiegelnaht (14) zwischen sich einklemmende Vorabzugsrollen (41) vorgesehen sind.

14. Schlauchbeutelmaschine nach Anspruch 1, Anspruch 10 oder Anspruch 11, dadurch gekennzeichnet, daß ein um zwei Räder (42) und entlang der Heizfläche (26) einer Schweißbacke (23) verlaufendes Heißsiegelband (42) vorgesehen ist, und daß die Schweißbacke (23) über das Heißsiegelband (43) die Längssiegelnaht (14) erwärmt.

15. Schlauchbeutelmaschine nach Anspruch 1, Anspruch 2 oder Anspruch 14, dadurch gekennzeichnet, daß die Heizflächen (26) der Schweißbacken (23) mit einer reibungsmindernden Beschichtung (44) versehen sind.
